# EUROPEAN PATENT APPLICATION

(11) **EP 4 685 200 A2**
(43) Date of publication of application: **28.01.2026**
(21) Application number: 24774220.8
(22) Date of filing: 21.03.2024
(51) Int. Cl.: C09D 163/00, C09D 5/08, C08G 59/50

(54) **QUICK-DRYING AND ANTI-CORROSION TWO-COMPONENT WATER-BASED COATING COMPOSITION, AND COATED SUBSTRATE**

(30) Priority: 21.03.2023 CN 202310277843
(71) Applicant: PPG Coatings (Tianjin) Co., Ltd., Tianjin 300457 (CN)
(72) Inventor: GUO, Yongliang, Tianjin 300457 (CN); DOU, Meng, Tianjin 300457 (CN)
(74) Representative: f & e patent
(86) International application number: PCT/CN2024/083054
(87) International publication number: WO 2024/193656

(57) **Abstract**

Disclosed is a fast-dry and corrosion resistant two-component waterborne coating composition, including a first component and a second component, where the first component includes an epoxy resin and the second component includes an amine hardener, where the amine hardener includes (a) moieties containing primary amine and/or secondary amine, (b) moieties containing epoxy groups, and (c) moieties containing tertiary amine. Further disclosed is a coated substrate, including a substrate and the two-component waterborne coating composition applied on at least a part of the substrate.

## Description

### Cross-reference to Related Applications

This application claims priority to Chinese invention patent application No. 202310277843.5 entitled "FAST-DRY AND CORROSION RESISTANT TWO-COMPONENT WATERBORNE COATING COMPOSITION AND COATED SUBSTRATE" filed on March 21, 2023, which is incorporated herein by reference in its entirety.

### Technical Field

The present invention relates to the field of coatings, and in particular to a fast-dry and corrosion resistant two-component waterborne coating composition and a coated substrate.

### Related Art

With the increasingly stringent national requirements for environmental protection, the use of solvent-borne coatings is increasingly restricted, and the market demand for waterborne coatings is expanding. Waterborne coatings currently on the market have deficiencies in the performance and are not comparable to solvent-borne coatings. Therefore, how to improve the performance of waterborne coatings is the hot spot of research in the field of coatings at the current stage.

For two-component waterborne coatings used as, for example, primers, performance requirements include fast drying, good humidity resistance, and corrosion resistance. However, methods in the prior art cannot simultaneously meet these performance requirements. Therefore, it is expected to develop a two-component waterborne coating material that has excellent comprehensive performance, such as fast drying, humidity resistance, and corrosion resistance.

### SUMMARY

The inventors have conducted extensive research and developed a two-component waterborne coating composition that has excellent comprehensive performance, such as fast drying, humidity resistance, and corrosion resistance.

The present invention provides a two-component waterborne coating composition, including a first component and a second component, where the first component includes an epoxy resin and the second component includes an amine hardener, where the amine hardener includes: (a) moieties containing primary amine and/or secondary amine, (b) moieties containing epoxy groups, and (c) moieties containing tertiary amine.

The present invention further provides a coated substrate, including a substrate and the two-component waterborne coating composition applied on at least a part of the substrate.

### DETAILED DESCRIPTION

In this application, unless otherwise expressly stated, the use of the singular includes the plural and the plural includes the singular. For example, although "a" resin is referred to herein, one or more of such materials may be used.

In this application, the terms "include", "comprise", and "contain" are not intended to limit the present invention to exclude any variations or additions. Furthermore, although the coating composition, preparation method, and the like according to the present invention has been described in terms such as "comprise", the coating composition, preparation method, and the like detailed herein may also be described as "be substantially composed of..." or "be composed of...". In this case, "being substantially composed of..." means that any additional component does not substantively affect the properties of a coating layer formed by the coating composition.

In this application, unless otherwise expressly stated, "or" is used to denote "and/or", even though "and/or" may be used explicitly in some cases. Further, it should be understood that any range of values set forth herein is intended to include all subranges contained therein. For example, the range "1 to 10" is intended to include all subranges between the enumerated minimum value of 1 and the enumerated maximum value of 10 (including end values), i.e., all subranges having a minimum value equal to or greater than 1 and a maximum value equal to or less than 10.

Except as in the Embodiments or as otherwise expressly stated, it is to be assumed that all numerical values used in the specification and the claims to represent quantities of components, and the like, may in all cases be varied in accordance with the term "about". Therefore, unless stated to the contrary, numerical parameters set forth in the following specification and claims are approximate values and may be varied in accordance with the performance desired to be obtained by the present invention. At the very least, it is not intended to limit the application of the doctrine of equivalents with respect to the scope of claims. Each numerical parameter should at least be interpreted in terms of significant figures and ordinary rounding should be applied.

Although the ranges of values and parameters expressing the broad range of the present invention are approximate values, the values listed in the specific embodiments are recorded as accurately as possible. However, any value is inherently subject to a certain amount of error that is a corollary of the standard deviation derived from its corresponding measurement method.

As mentioned above, the present invention provides a two-component waterborne coating composition, including a first component and a second component, where the first component includes an epoxy resin and the second component includes an amine hardener, where the amine hardener includes: (a) moieties containing primary amine and/or secondary amine, (b) moieties containing epoxy groups, and (c) moieties containing tertiary amine.

As used herein, the term "two-component coating (2K)", also known as two-pack or two-can coating, refers to a coating that contains two components packaged separately and then mixed in exact proportions prior to use to cure to a film.

As used herein, the term "waterborne" means that the solvent of the coating composition may contain at least about 50 wt% water, and for example, may contain at least about 60 wt%, at least about 70 wt%, at least about 80 wt%, at least about 90 wt%, or at least about 95 wt% water. The two-component waterborne coating composition according to the present invention may be a low VOC content coating composition. As used herein, the term "VOC (volatile organic compound)" refers to any organic compound having a boiling point of less than or equal to about 250°C (about 482°F) measured at a standard atmospheric pressure of about 101.3 kPa. Organic solvents are usually the main source of VOCs. The term "low VOC content" refers to a VOC content of less than, for example, about 400 g/L, e.g., less than about 300 g/L, less than about 200 g/L, or less than about 100 g/L. In some embodiments, the waterborne coating composition according to the present invention may have a VOC content (without water) of, for example, less than about 100 g/L, which meets a standard of less than about 420 g/L of VOC for waterborne coatings as required by China's national environmental protection regulations. A VOC value may be obtained by detecting the contents of organic compound components in a coating by gas chromatography, and then adding up the contents of the components.

Suitably, the two-component waterborne coating composition according to the present invention may be a thermosetting coating composition, i.e., the coating composition may irreversibly form a coating film after curing, and the coating film does not melt upon reheating and does not dissolve in solvents. As used herein, the term "cure" means that at least a portion of the components of the coating composition may be polymerized and/or crosslinked, or may be dried to form a hardened coating film.

Suitably, the two-component waterborne coating composition according to the present invention may be cured at about 5°C to about 80°C. Suitably, the two-component waterborne coating composition according to the present invention may be cured at room temperature, for example, at a temperature of about 15°C to about 30°C.

Suitably, the two-component waterborne coating composition according to the present invention may have a fast drying property. Suitably, the coating formed from the coating composition may be touch dry at room temperature in about 5 min to about 20 min. As used herein, the term "touch dry", also known as surface dry, means that a coating film does not stick to the hands when touched directly with the fingers.

Suitably, the two-component waterborne coating composition according to the present invention may be used as a primer. As used herein, the term "primer" refers to a coating layer between a substrate and a color coat. The primer may be applied directly to the substrate. Alternatively, the primer may be applied to the substrate that already contains a coating layer.

Suitably, the two-component waterborne coating composition according to the present invention may have a solid content in a range of about 40-60 wt%. As used herein, the "solid content" of the coating composition is the ratio of the mass of the coating composition remaining after drying and evaporation to the total mass of the composition.

Suitably, the epoxy resin for use in the first component of the two-component waterborne coating composition according to the present invention may include a polymer containing two or more epoxy groups in the molecule. The content of epoxy groups in the epoxy resin may be expressed in epoxy equivalent. As used herein, the term "epoxy equivalent" refers to the mass in grams of the epoxy resin containing 1 gram equivalent of epoxy groups. Suitably, the epoxy resin may have an epoxy equivalent in a range of about 450-550 g/eq. For example, the epoxy resin may have an epoxy equivalent in a range of, for example, about 450-530 g/eq, about 480-530 g/eq, and about 480-500 g/eq, or in a range of any other combinations using these end values, and for example, may have an epoxy equivalent of about 480 g/eq, about 500 g/eq, or about 530 g/eq.

Suitably, the epoxy resin may have a hydroxyl value in a range of about 50-200 mgKOH/g. As used herein, the term "hydroxyl value" refers to the number of milligrams of potassium hydroxide (KOH) equivalent to hydroxyl groups in 1 gram of resin. For example, the epoxy resin may have a hydroxyl value in a range of about 50-180 mgKOH/g, about 50-160 mgKOH/g, about 80-160 mgKOH/g, about 80-140 mgKOH/g, about 80-120 mgKOH/g, or about 80-100 mgKOH/g, or in a range of any other combinations using these end values, and for example, may have a hydroxyl value of about 100 mgKOH/g, about 120 mgKOH/g, about 140 mgKOH/g, about 160 mgKOH/g, or about 180 mgKOH/g.

In the two-component waterborne coating composition according to the present invention, the epoxy resin having the appropriate epoxy equivalent and hydroxyl value may provide crosslinking points required for crosslinking with a hardener, thereby providing the coating layer with excellent resistance and various mechanical properties, imparting polarity to the coating layer, and enhancing the adhesion between the coating layer and the substrate.

Suitably, the epoxy resin may be in the form of an emulsion. The emulsion of the epoxy resin may have a solid content in a range of about 45-60 wt%. As used herein, the "solid content" of the emulsion refers to the mass remaining after evaporation as a percentage of the mass of the original emulsion.

Suitably, the epoxy resin may be greater than about 10 wt%, suitably at least about 15 wt%, suitably at least about 20 wt%, and/or at most about 35 wt%, for example, at most about 30 wt%, suitably at most about 25 wt% based on the total weight of the first component. For example, the epoxy may be in a range of about 10-35 wt%, suitably about 15-30 wt%, for example, about 20-25 wt%, or in a range of any other combinations using these end values based on the total weight of the first component.

Suitably, the amine hardener for the second component of the two-component waterborne coating composition according to the present invention may react with the aforementioned epoxy resin to form a cross-linked film. Suitably, the amine hardener may include: (a) moieties containing primary amine and/or secondary amine, (b) moieties containing epoxy groups, and (c) moieties containing tertiary amine. The (a) moieties containing primary amine and/or secondary amine may contain primary amine and/or secondary amine groups; the (b) moieties containing epoxy groups may contain epoxy groups; and the (c) moieties containing tertiary amine may contain a collection of tertiary amine-containing monomers (or repeating units) in the amine hardener.

Suitably, the (c) moieties containing tertiary amine may be in a range of about 3-10 wt% based on the total solid weight of the amine hardener. For example, the (c) moieties containing tertiary amine may be in a range of about 4-10 wt%, about 5-10 wt%, about 6-10 wt%, about 6-9 wt%, about 6-8 wt%, about 6-7 wt%, or in a range of any other combinations using these end values, and for example, may be about 4 wt%, about 5 wt%, about 6 wt%, about 7 wt%, about 8 wt%, or about 9 wt% based on the total solid weight of the amine hardener. As used herein, the total solid weight of the amine hardener refers to the mass remaining after the solvent is dried and evaporated.

Suitably, the amine hardener may have a branched structure including a main chain and at least one branched chain. Suitably, the (a) moieties containing primary amine and/or secondary amine and the (b) moieties containing epoxy groups may be located on the main chain to form a block structure. Suitably the (c) moieties containing tertiary amine may be located on the branched chain.

Or optionally, the amine hardener may have a linear structure. Suitably, in the amine hardener, the (a) moieties containing primary amine and/or secondary amine may be located on at least one end of the main chain. For example, in the amine hardener, the (a) moieties containing primary amine and/or secondary amine may be located on two ends of the main chain.

Suitably, the amine hardener may further include additional hydrophilic moieties and/or additional hydrophobic moieties to adjust hydrophilicity of the amine hardener. The hydrophilicity of the amine hardener may be expressed by an HLB value (hydrophilic-lipophilic balance value). Suitably, the HLB value of the amine hardener may be in a range of about 5-15. For example, the HLB value of the amine hardener may be in a range of about 6-15, about 7-15, about 8-15, about 8-14, about 8-13, about 8-12, or in a range of any other combinations using these end values, and for example, may be about 6, about 7, about 8, about 9, about 10, about 11, about 12, about 13, or about 14.

Suitably, the additional hydrophilic moieties and/or additional hydrophobic moieties may be different from the moieties (a), (b) and (c). Suitably, the additional hydrophilic moieties and/or additional hydrophobic moieties may be blocks in a main chain or a linear structure. Suitably, the hydrophilic moieties may include polyether units. Suitably, the hydrophobic moieties may include aromatic hydrocarbon units, and/or aliphatic hydrocarbon units.

Suitably, the (b) moieties containing epoxy groups may include bisphenol A type epoxy units, i.e., units that may be obtained by polymerizing bisphenol A with epichlorohydrin. The (b) moieties containing epoxy groups may improve the compatibility of the amine hardener in the coating system of the present invention.

Suitably, in the amine hardener, the primary amine and/or secondary amine may provide active hydrogen. In the presence of a specific proportion of tertiary amine, the primary amine and/or secondary amine may effectively react with the resin (e.g., epoxy resin) in the first component. In some examples, the amine hardener has an active hydrogen equivalent of about 300-400 g/eq. As used herein, the term "active hydrogen equivalent" refers to the amount of hydrogen in the amine hardener in which the hydrogen bonds can break during a chemical reaction. For example, the amine hardener may have an active hydrogen equivalent in a range of about 320-380 g/eq, about 340-380 g/eq, about 340-360 g/eq, or about 360-380 g/eq, or in a range of any other combinations using these end values, and for example, may be 320 g/eq, 340 g/eq, 360 g/eq, or 380 g/eq. In the amine hardener, the source of the active hydrogen may be primary amine and/or secondary amine.

Suitably, the amine hardener may have a high molecular weight, thereby enhancing fast drying while maintaining good compatibility. In some examples, the amine hardener may have a weight average molecular weight of at least about 50,000, for example, about 50,000 to 100,000. The weight average molecular weight may be determined by gel permeation chromatography using an appropriate standard such as a polystyrene standard. For example, the amine hardener may have a weight average molecular weight in a range of about 50,000-90,000, about 50,000-80,000, about 60,000-80,000, about 60,000-70,000, or in a range of any other combinations using these end values, and for example, may be about 60,000, about 70,000, about 80,000, or about 90,000.

Suitably, the amine hardener may be in the form of a self-emulsifying emulsion. As used herein, the term "self-emulsifying emulsion" refers to an emulsion which may form the amine hardener without addition of an emulsifier. Suitably, the amine hardener in the form of a self-emulsifying emulsion may have a solid content in a range of about 30-40 wt%. As used herein, the "solid content" of a self-emulsifying emulsion is the mass remaining after evaporation as a percentage of the mass of the original emulsion. In the coating system of the present invention, the emulsion of the amine hardener may have stability, allowing the coating composition to have an extended service life and fast drying, and imparting excellent initial water resistance to the coating.

Suitably, the amine hardener may be a commercially available product or may be prepared by a method known in the art, for example, a phase inversion method. In some examples, the amine hardener may be prepared by, for example: allowing a polyamine compound, low-molecular weight epoxy resin, hydrophilic glycidyl ether, and the like to undergo a chain extension reaction in a suitable solvent, adding a reactive emulsifier containing amine groups during the reaction process, and terminating the reaction when a certain amine value or molecular weight is reached in the reaction; dropwise adding and stirring water at high speed to enable phase inversion, so as to prepare a water-dispersible hardener emulsion. Various reactants suitable for the reaction are known in the art or commercially available, and are not specifically limited in the present invention. In the above method, the polyamine compound is used to provide primary amine, secondary amine, and tertiary amine in the amine hardener, so that by selecting the type of the polyamine compound containing the primary amine, secondary amine, and tertiary amine and adjusting the amount, moieties containing primary amine and/or secondary amine and a specific amount of moieties containing tertiary amine for the amine hardener may be obtained; the epoxy resin is used to react with the polyamine compound to provide moieties containing epoxy groups for the amine hardener, so as to improve the compatibility of the amine hardener with the resin in the coating composition and increase the molecular weight of the amine hardener; and the molecular weight of the amine hardener may be controlled by adjusting a reaction endpoint.

Suitably, the amine hardener may be at least about 15 wt%, suitably at least about 20 wt%, suitably at least about 25 wt%, and/or at most about 60 wt%, for example, at most about 55 wt%, suitably at most about 50 wt% based on the total weight of the second component. For example, the amine hardener may be in a range of about 15-60 wt%, suitably 20-55 wt%, for example, 25-50 wt%, or in a range of any other combinations using these end values based on the total weight of the second component.

Suitably, a solid weight ratio of the epoxy resin to the amine hardener in the two-component waterborne coating composition according to the present invention may be in a range of about 3.5:1 to about 6:1. For example, the solid weight ratio of the epoxy resin to the amine hardener may be in a range of about 4:1 to about 5.5:1, about 4.5:1 to about 5.5:1, or about 5:1 to about 5.5:1, or in a range of any other combinations using these end values, and for example, may be about 4:1, about 4.5:1, about 5:1, or about 5.5:1. The epoxy resin and the amine hardener may effectively react to form a film and provide excellent performance. Therefore, the two-component waterborne coating composition according to the present invention may be substantially free of a separate curing promoter. As used herein, the separate curing promoter refers to a compound that is independent of/free from the amine hardener and that promotes cross-linking of the epoxy resin with the amine hardener. The separate curing promoter may have a relatively small molecular weight, is easily soluble, and affects the appearance of the coating layer due to, for example, blistering after soaking in water or under hot and humid conditions. For example, the separate curing promoter may include a tertiary amine compound such as DMP-30 (2,4,6-tris(dimethylaminomethyl)phenol). The two-component waterborne coating composition according to the present invention may be substantially free of a separate tertiary amine compound. The separate tertiary amine compound may be different from the aforementioned amine hardener. As used herein, "being substantially free" of the separate curing promoter means that the amount of the separate curing promoter is less than about 0.1 wt% based on the total weight of the coating composition.

Suitably, the first component of the two-component waterborne coating composition according to the present invention may further include pigments and/or fillers. As used herein, the terms "pigments and/or fillers" refer to materials that provide colors, effects, and/or functions to the coating composition, and include coloring pigments and fillers (also known as extender pigments).

Suitably, the pigments and/or fillers for the first component may include antirust pigments. Suitably, the antirust pigments may include zinc phosphate, aluminum phosphate, and/or silica sol. Suitably, the pigments and/or fillers for the first component may further include carbon black, titanium white, iron oxide yellow, iron oxide red, talc, mica powder, and/or barium sulfate. Suitably, the pigments and/or fillers for the first component may include a combination of an antirust pigment with talc and/or barium sulfate. Suitably, in the combination of the antirust pigment with the talc and/or barium sulfate, a weight ratio of the antirust pigment to the talc and/or barium sulfate may be in a range of about 1:1 to about 1:7. For example, the weight ratio of the antirust pigment to the talc and/or barium sulfate may be in a range of about 1:1.5 to about 1:7, about 1:2 to about 1:7, about 1:2.5 to about 1:7, about 1:3 to about 1:7, about 1:3 to about 1:6.5, about 1:3 to about 1:6, about 1:3 to about 1:5.5, about 1:3 to about 1:5, or in a range of any other combinations using these end values, and for example, may be about 1:1.5, about 1:2, about 1:2.5, about 1:3, about 1:3.5, about 1:4, about 1:4.5, about 1:5, about 1:5.5, about 1:6, or about 1:6.5. By using the combination of the antirust pigment with the talc and/or barium sulfate, the antirust pigment may passivate a metal substrate, and further increase the densification of the coating film when paired with the talc and/or barium sulfate, thereby physically insulating the metal substrate from corrosion.

Suitably, the pigments and/or fillers may be greater than about 20 wt%, suitably at least about 25 wt%, suitably at least about 30 wt%, and/or at most about 55 wt%, for example, at most about 50 wt%, suitably at most about 45 wt% based on the total weight of the first component. The pigments and/or fillers may be in a range of about 20-55 wt%, suitably about 25-50 wt%, for example, about 30-45 wt%, or in a range of any other combinations using these end values based on the total weight of the first component.

Suitably, the pigments and/or fillers may be present substantially in the first component of the two-component waterborne coating composition according to the present invention. In other words, the second component of the two-component waterborne coating composition according to the present invention may be substantially free of pigments and/or fillers. As used herein, the "being substantially free" of pigments and/or fillers means that the second component contains less than about 0.1 wt% of pigments and/or fillers based on the total weight of the second component.

Suitably, the two-component waterborne coating composition according to the present invention may have a pigment volume concentration (also known as PVC) of about 20-35. As used herein, the term "pigment volume concentration" refers to the volume ratio of pigments and/or fillers to all non-volatile components of the coating composition in a dry film formed by the coating composition, where the pigments and/or fillers may include coloring pigments and fillers (i.e., extender pigments), and all the non-volatile components may include resin solids and the pigments and/or fillers.

Suitably, the first component of the two-component waterborne coating composition according to the present invention may further include nonionic dispersants to promote compatibility of the components in the waterborne coating composition. The use of the nonionic dispersants in the two-component waterborne coating composition according to the present invention may avoid effects on stability and post-cure properties of paint films due to epoxy ring-opening that may result from the use of the ionic dispersant after long-time storage. In some examples, suitable nonionic dispersants may include, but are not limited to, ALLNEX ADDITOL VXW 6208/60, BYK 190, BYK 2080, OMG Borchers 1252, BASF 4550, and the like. Suitably, the dispersants may be in a range of about 0-5 wt%, for example, about 0.5-3 wt% based on the total weight of the first component.

Suitably, the first component of the two-component waterborne coating composition according to the present invention may further include defoamers. As used herein, the term "defoamer" refers to a material that inhibits the formation of air bubbles during a production process and helps escape or rupture of generated air bubbles. Suitably, the defoamers may include organosilicon defoamers. In some examples, suitable defoamers may include, but are not limited to, BYK-024, BYK022, BYK019, BASF FoamStar SI2299, Tego901W, Tego902W, and the like. Suitably, the defoamers may be in a range of about 0-2 wt%, for example, about 0.1-1.5 wt% based on the total weight of the first component.

Suitably, the first component of the two-component waterborne coating composition according to the present invention may further include coalescing agents. As used herein, the term "coalescing agent" refers to a material that helps lower the minimum film-forming temperature of a resin, improves the film-forming properties, and increases the glossiness of a paint film. In some examples, suitable coalescing agents may include, but are not limited to, DPNB, DPM, PPH, alcohol ester 12, and the like. Suitably, the coalescing agents may be in a range of about 0-5 wt%, for example, about 0.5-3 wt% based on the total weight of the first component.

Suitably, the first component of the two-component waterborne coating composition according to the present invention may further include substrate wetting agents. As used herein, the term "substrate wetting agent" refers to a material that improves the surface tension and permeability of the waterborne coating composition, better wets the substrate, and provides adhesion of the coating. Suitably, the substrate wetting agents may be in a range of about 0-2 wt%, for example, about 0.1-1 wt% based on the total weight of the first component.

Suitably, the first component of the two-component waterborne coating composition according to the present invention may further include rheological thickeners. As used herein, the term "rheological thickener" refers to a material that increases the viscosity of the coating, improves a wet film thickness, and protects the coating from settling and delamination. In some examples, the thickeners may include bentonite, fumed silica, and/or hydrophobically modified polyurethane. Suitably, the rheological thickeners may be in a range of about 0-2 wt%, for example, about 0.1-1 wt% based on the total weight of the first component.

Suitably, the first component of the two-component waterborne coating composition according to the present invention may further include water. Suitably, the water may be in a range of about 10-40 wt% based on the total weight of the first component.

Suitably, the first component of the two-component waterborne coating composition according to the present invention may further include one or more other film-forming materials (e.g., other resins different from the aforementioned epoxy resin) to provide desired properties. In some examples, the first component of the two-component waterborne coating composition according to the present invention may further include one or more other additives, which are suitable for use in a waterborne coating system in an amount that can be determined by a person skilled in the art based on the desired properties.

Suitably, the second component of the two-component waterborne coating composition according to the present invention may further include one or more of the aforementioned additives or other additives. The additives used in the first component may be the same or different from the corresponding additives used in the second component. For example, the second component of the two-component waterborne coating composition according to the present invention may further include an appropriate amount of coalescing agents to improve the film-forming properties without interfering with the drying of the paint film. Suitably, the coalescing agents may be in a range of about 0-2 wt%, for example, about 0.1-1 wt% based on the total weight of the second component.

Suitably, the second component of the two-component waterborne coating composition according to the present invention may further include water. Suitably, the water may be in a range of about 10-40 wt% based on the total weight of the second component.

In some embodiments, the two-component waterborne coating composition according to the present invention may be prepared by the following method:
I. preparation of the first component, including:
   (1) a mixture containing pigments and/or fillers, additives, and solvents is ground for about 1-2 h at a temperature of less than about 50°C to a maximum particle size of greater than about 15 µm;
   (2) an epoxy resin, additives, solvents, and the like are added to the mixture of step (1) at a temperature of about 10-40°C, and stirred for about 10-20 min;
II. preparation of the second component, including:
   an amine hardener, optional additives, solvents, and the like are added in steps at a temperature of about 10-40°C, and stirred for about 10-20 min; and
III. the first component is mixed with the second component at a temperature of about 10-40°C.

Suitably, in step (1), the pigments and/or fillers, additives, and solvents may be added to a container one by one and mixed, and each material is added at a time interval of about 1-5 min.

Suitably, in step (2), the epoxy resin, additives, solvents, and the like may be added to a container one by one and mixed, and each material is added at a time interval of about 1-5 min.

Suitably, the first component and the second component may be mixed in a volume ratio of about 3.5:1 to about 6:1. For example, the volume ratio of the first component to the second component may be in a range of about 4:1 to about 5.5:1, about 5:1 to about 5.5:1, or in a range of any other combinations using these end values, and for example, may be about 4:1, about 4.5:1, about 5:1, or about 5.5:1.

In other embodiments, the present invention further provides a coated substrate. The coated substrate may include a substrate and the two-component waterborne coating composition applied on at least a part of the substrate. The two-component waterborne coating composition may be applied directly on an uncoated substrate. Or optionally, the waterborne coating composition may be applied to a coated substrate. Suitably, the substrate may include metal, and for example, may include a metal substrate. Suitably, the substrate may be a part of the following: industrial equipment, vehicles, or construction steel structures.

Suitably, the two-component waterborne coating composition according to the present invention may be applied by means known to a person skilled in the art, such as electrocoating, spraying, electrostatic spraying, dipping, roller coating, and brushing, and then cured to form a coating layer.

Suitably, the two-component waterborne coating composition according to the present invention may be cured at about 5°C to about 80°C. Suitably, the two-component waterborne coating composition according to the present invention may be cured at room temperature, for example, at a temperature of about 15°C-30°C. Suitably, the coating formed from the two-component waterborne coating composition according to the present invention may be touch dry at room temperature in about 5-20 min.

Suitably, the two-component waterborne coating composition according to the present invention may form a coating layer having a dry film thickness of about 30 µm to about 150 µm. As used herein, the term "dry film thickness" refers to the thickness of the coating composition when fully cured.

In other embodiments, the present invention further provides uses of the aforementioned two-component waterborne coating composition for coating substrates.

### Embodiments

The following embodiments are provided to further elaborate the present invention, but should not be taken to limit the present invention to the details described in the embodiments. All parts and percentages in the following embodiments are by weight unless otherwise indicated.

### Embodiments:

Two-component waterborne coating compositions Ex1, Ex2 and Ex3 according to the present invention were prepared using the materials and amounts listed in Table 1 below:
(1) materials 1-6 in the first component were added to a container one by one at a temperature of about 10-40°C and mixed, and each material was added at a time interval of about 1-5 min;
(2) the materials 1-6 in the first component were ground for about 1-2 h at a temperature of less than about 50°C to a maximum particle size of greater than about 15 µm;
(3) materials 7-11 in the first component were added to a container one by one at a temperature of about 10-40°C and mixed, each material was added at a time interval of about 1-5 min, and then the mixture was stirred for 10-20 min;
(4) materials 1-3 in the second component were added in steps at a temperature of about 10-40°C, and stirred for about 10-20 min; and
(5) the first component was mixed with the second component at a temperature of about 10-40°C, and the volume ratio of the first component to the second component was 5/1.

**Table 1 Two-component waterborne coating compositions Ex1, Ex2 and Ex3 according to the present invention**

| | Materials | Ex1 (wt%) | Ex2 (wt%) | Ex3 (wt%) |
|---|---|---|---|---|
| First component | | | | |
| 1 | Deionized water | 12 | 12 | 13 |
| 2 | Non-ionic dispersant^{a} | 1.5 | 1.0 | 2.0 |
| 3 | Filler^{b} | 15 | 18 | 25 |
| 4 | Antirust pigment^{c} | 8 | 6 | 4 |
| 5 | Coloring pigment^{d} | 8 | 6 | 10 |
| 6 | Defoamer^{e} | 0.2 | 0.2 | 0.4 |
| 7 | Waterborne epoxy emulsion^{f} | 42 | 38 | 34 |
| 8 | Substrate wetting agent^{g} | 0.1 | 0.2 | 0.3 |
| 9 | Coalescing agent^{h} | 2 | 2 | 2 |
| 10 | Rheological thickenerⁱ | 0.3 | 0.5 | 0.1 |
| 11 | Deionized water | 10.9 | 16.1 | 9.2 |

| Second component | | | | |
|---|---|---|---|---|
| 1 | Amine hardener^{j} | 70 | 63 | 56 |
| 2 | Coalescing agent^{h} | 1 | 0.5 | 0 |
| 3 | Deionized water | 29 | 36.5 | 44 |

### Note:

^{a} Allnex ADDITOL VXW 6208;
^{b} Talc and barium sulphate;
^{c} HEUCOPHOS ZPA;
^{d} Selected from titanium white, iron oxide yellow, iron oxide red, and/or carbon black;
^{e} BYK024;
^{f} Waterborne epoxy emulsion with a solid content of 50-60 wt%, an epoxy equivalent of 450-550 g/eq, and a hydroxyl value of 50-200 mgKOH/g;
^{g} Selected from BYK348, and/or TEGO TWIN 4100;
^{h} Selected from DPNB, and/or DPM;
ⁱ DOW ACRYSOL RM-12W and/or ACRYSOL RM-2020;
^{j} Amine hardener emulsion with a solid content of about 30-40 wt%, the amine hardener including (a) moieties containing primary amine and/or secondary amine, (b) moieties containing epoxy groups, and 3-10 wt% of (c) moieties containing tertiary amine, with an HLB value of 5-15, an active hydrogen equivalent that may be 300-400 g/eq, and a weight average molecular weight of at least 50,000.

### Comparative Examples:

Two-component waterborne coating compositions CE1, CE2 and CE3 according to Comparative Examples were prepared using the materials and amounts listed in Table 2 below:
(1) materials 1-6 in the first component were added to a container one by one at a temperature of about 10-40°C and mixed, and each material was added at a time interval of about 1-5 min;
(2) the materials 1-6 in the first component were ground for about 1-2 h at a temperature of less than about 50°C to a maximum particle size of greater than about 15 µm;
(3) materials 7-11 in the first component were added to a container one by one at a temperature of about 10-40°C and mixed, each material was added at a time interval of about 1-5 min, and then the mixture was stirred for 10-20 min;
(4) materials 1-3 in the second component were added in steps at a temperature of about 10-40°C, and stirred for about 10-20 min; and
(5) the first component was mixed with the second component at a temperature of about 10-40°C, and the volume ratio of the first component to the second component was 5/1.

**Table 2 Two-component waterborne coating compositions CE1, CE2 and CE3 according to Comparative Examples**

| | Materials | CE1 (wt%) | CE2 (wt%) | CE3 (wt%) |
|---|---|---|---|---|
| First component | | | | |
| 1 | Deionized water | 12 | 12 | 12 |
| 2 | Non-ionic dispersant^{a} | 1.5 | 1.5 | 1.5 |
| 3 | Filler^{b} | 15 | 15 | 15 |
| 4 | Antirust pigment^{c} | 8 | 8 | 8 |
| 5 | Coloring pigment^{d} | 8 | 8 | 8 |
| 6 | Defoamer^{e} | 0.2 | 0.2 | 0.2 |
| 7 | Waterborne epoxy emulsion^{f} | 42 | 42 | 42 |
| 8 | Substrate wetting agent^{g} | 0.1 | 0.1 | 0.1 |
| 9 | Coalescing agent^{h} | 2 | 2 | 2 |
| 10 | Rheological thickenerⁱ | 0.3 | 0.3 | 0.3 |
| 11 | Deionized water | 10.9 | 10.9 | 10.9 |

| Second component | | | | |
|---|---|---|---|---|
| 1 | Amine hardener | 70^{j1} | 70^{j2} | 70^{j3} |
| 2 | Coalescing agent^{h} | 1 | 1 | 1 |
| 3 | Deionized water | 29 | 29 | 29 |

### Note:

^{a} Allnex ADDITOL VXW 6208;
^{b} Talc and barium sulphate;
^{c} HEUCOPHOS ZPA;
^{d} Selected from titanium white, iron oxide yellow, iron oxide red, and/or carbon black;
^{e} BYK024;
^{f} Waterborne epoxy emulsion with a solid content of 50-60 wt%, an epoxy equivalent of 450-550 g/eq, and a hydroxyl value of 50-200 mgKOH/g;
^{g} Selected from BYK348, and/or TEGO TWIN 4100;
^{h} Selected from DPNB, and/or DPM;
ⁱ DOW ACRYSOL RM-12W;
^{j1} Huntsman 3986;
^{j2} Hexion 8530; and
^{j3} ALLNEX 2188.

Two-component waterborne coating compositions CE4, CE5 and CE6 according to Comparative Examples were prepared using the materials and amounts listed in Table 3 below:
(1) materials 1-6 in the first component were added to a container one by one at a temperature of about 10-40°C and mixed, and each material was added at a time interval of about 1-5 min;
(2) the materials 1-6 in the first component were ground for about 1-2 h at a temperature of less than about 50°C to a maximum particle size of greater than about 15 µm;
(3) materials 7-11 in the first component were added to a container one by one at a temperature of about 10-40°C and mixed, each material was added at a time interval of about 1-5 min, and then the mixture was stirred for 10-20 min;
(4) materials 1-3 in the second component were added in steps at a temperature of about 10-40°C,
   and stirred for about 10-20 min; and
(5) the first component was mixed with the second component at a temperature of about 10-40°C, and the volume ratio of the first component to the second component was 5/1.

**Table 3 Two-component waterborne coating compositions CE4, CE5 and CE6 according to Comparative Examples**

| | Materials | CE4 (wt%) | CE5 (wt%) | CE6 (wt%) |
|---|---|---|---|---|
| First component | | | | |
| 1 | Deionized water | 12 | 12 | 12 |
| 2 | Non-ionic dispersant^{a} | 1.5 | 1.5 | 1.5 |
| 3 | Filler^{b} | 15 | 15 | 15 |
| 4 | Antirust pigment^{c} | 8 | 8 | 8 |
| 5 | Coloring pigment^{d} | 8 | 8 | 8 |
| 6 | Defoamer^{e} | 0.2 | 0.2 | 0.2 |
| 7 | Waterborne epoxy emulsion^{f} | 42 | 42 | 42 |
| 8 | Substrate wetting agent^{g} | 0.1 | 0.1 | 0.1 |
| 9 | Coalescing agent^{h} | 2 | 2 | 2 |
| 10 | Rheological thickenerⁱ | 0.3 | 0.3 | 0.3 |
| 11 | Deionized water | 10.9 | 10.9 | 10.9 |

| Second component | | | | |
|---|---|---|---|---|
| 1 | Amine hardener | 70^{j1} | 70^{j2} | 70^{j3} |
| 2 | Coalescing agent^{h} | 1 | 1 | 1 |
| 3 | Promoter^{k} | 3 | 3 | 3 |
| 4 | Deionized water | 26 | 26 | 26 |

### Note:

^{a} Allnex ADDITOL VXW 6208;
^{b} Talc and barium sulphate;
^{c} HEUCOPHOS ZPA;
^{d} Selected from titanium white, iron oxide yellow, iron oxide red, and/or carbon black;
^{e} BYK024;
^{f} Waterborne epoxy emulsion with a solid content of 50-60 wt%, an epoxy equivalent of 450-550 g/eq, and a hydroxyl value of 50-200 mgKOH/g;
^{g} Selected from BYK348, and/or TEGO TWIN 4100;
^{h} Selected from DPNB, and/or DPM;
ⁱ DOW ACRYSOL RM-12W;
^{j1} Huntsman 3986;
^{j2} Hexion 8530;
^{j3} ALLNEX 2188; and
^{k} DMP-30.

A two-component waterborne coating composition CE7 according to Comparative Examples was prepared using the materials and amounts listed in Table 4 below:
(1) materials 1-6 in the first component were added to a container one by one at a temperature of about 10-40°C and mixed, and each material was added at a time interval of about 1-5 min;
(2) the materials 1-6 in the first component were ground for about 1-2 h at a temperature of less than about 50°C to a maximum particle size of greater than about 15 µm;
(3) materials 7-11 in the first component were added to a container one by one at a temperature of about 10-40°C and mixed, each material was added at a time interval of about 1-5 min, and then the mixture was stirred for 10-20 min;
(4) materials 1-3 in the second component were added in steps at a temperature of about 10-40°C, and stirred for about 10-20 min; and
(5) the first component was mixed with the second component at a temperature of about 10-40°C, and the volume ratio of the first component to the second component was 5/1.

**Table 4 Two-component waterborne coating composition CE7 according to Comparative Examples**

| | Materials | CE7 (wt%) |
|---|---|---|
| First component | | |
| 1 | Deionized water | 12 |
| 2 | Ionic dispersant^{a} | 1.0 |
| 3 | Filler^{b} | 18 |
| 4 | Antirust pigment^{c} | 6 |
| 5 | Coloring pigment^{d} | 6 |
| 6 | Defoamer^{e} | 0.2 |
| 7 | Waterborne epoxy emulsion^{f} | 38 |
| 8 | Substrate wetting agent^{g} | 0.2 |
| 9 | Coalescing agent^{h} | 2 |
| 10 | Rheological thickenerⁱ | 0.5 |
| 11 | Deionized water | 16.1 |

| Second component | | |
|---|---|---|
| 1 | Amine hardener^{j} | 63 |
| 2 | Coalescing agent^{h} | 0.5 |
| 3 | Deionized water | 36.5 |

### Note:

^{a}Ionic dispersant: BYK151;
^{b} Talc and barium sulphate;
^{c} HEUCOPHOS ZPA;
^{d} Selected from titanium white, iron oxide yellow, iron oxide red, and/or carbon black;
^{e} BYK024;
^{f} Waterborne epoxy emulsion with a solid content of 50-60 wt%, an epoxy equivalent of 450-550 g/eq, and a hydroxyl value of 50-200 mgKOH/g;
^{g} Selected from BYK348, and/or TEGO TWIN 4100;
^{h} Selected from DPNB, and/or DPM;
ⁱ DOW ACRYSOL RM-12W and/or ACRYSOL RM-2020;
^{j} Amine hardener emulsion with a solid content of about 30-40 wt%, the amine hardener including (a) moieties containing primary amine and/or secondary amine, (b) moieties containing epoxy groups, and 3-10 wt% of (c) moieties containing tertiary amine, with an HLB value of 5-15, an active hydrogen equivalent that may be 300-400 g/eq, and a weight average molecular weight of at least 50,000.

### Performance testing:

First, the two-component waterborne coating compositions Ex1-Ex3 and the coating compositions CE1-CE7 in the Comparative Examples prepared as above were applied to metal substrates, baked at 80°C for 30 min, and then left at room temperature for 7 days.

The coated substrates were then tested for each of the following performances:
1-Sagging: Determine the dry film thickness of a TU4 viscosity cup that does not sag when sprayed at 40-50S.
2-Salt spray resistance: Perform salt spray resistance testing according to the GB/T 1771 standard to determine the corrosion width after 1,000 h. Testing requirements: the corrosion width after 1,000 h is less than 2 mm.
3-Resistance to heat and humidity: Perform resistance to heat and humidity testing according to the GB/T 1740 standard, and observe the coating layer for blistering, rusting, or peeling after 1,000 h. Testing requirements: the coating layer has no blistering, rusting, or peeling after 1,000 h.

The two-component waterborne coating compositions Ex1-Ex3 and the coating compositions CE1-CE7 in the Comparative Examples prepared as above were applied to 8 mm thick metal substrates, self-dried at room temperature for 4-6 h, and then tested for fast drying of the coating layer.

4-Fast drying: Sand with 280 grit sandpaper, the coating layer being required to be able to be sanded without staining the sandpaper.

The two-component waterborne coating compositions Ex1-Ex3 and the coating compositions CE1-CE7 in the Comparative Examples prepared as above were applied to metal substrates, self-dried at room temperature for 24 h, and then tested for initial water resistance of the coating layer.

5-Initial water resistance: Observe the coating layer for blistering and peeling after soaking the coating layer in water for 96 h. Testing requirements: the coating layer has no blistering or peeling after being soaked in water for 96 h.

**Table 5 Test results for Ex1, Ex2 and Ex3**

| **Test item** | **Ex1** | **Ex2** | **Ex3** |
|---|---|---|---|
| Sagging | 150 µm | 170 µm | 180 µm |
| Salt spray resistance | 1.5 mm | 1.8 mm | 2.0 mm |
| Resistance to heat and humidity | OK | OK | OK |
| Fast drying | OK | OK | OK |
| Initial water resistance | OK | OK | OK |

**Table 6 Test results for CE1, CE2, CE3, CE4, CE5, CE6, and CE7**

| **Test item** | **CE1** | **CE2** | **CE3** | **CE4** | **CE5** | **CE6** | **CE7** |
|---|---|---|---|---|---|---|---|
| Sagging | 110 µm | 150 µm | 140 µm | 110 µm | 150 µm | 140 µm | 120 µm |
| Salt spray resistance | 1.6 mm | 2.5 mm | 1.8 mm | 2.0 mm | 2.5 mm | 1.8 mm | 3 mm |
| Resistance to heat and humidity | OK | OK | OK | Blistering | Blistering | Blistering | Blistering |
| Fast drying | Cannot be sanded | Cannot be sanded | Cannot be sanded | OK | OK | OK | OK |
| Initial water resistance | Blistering | Blistering | Blistering | OK | OK | Blistering | Blistering |

Although particular aspects of the present invention have been explained and described, it will be apparent to a person skilled in the art that a variety of other changes and modifications may be made without departing from the spirit and scope of the present invention. The appended claims are therefore intended to cover all such changes and modifications that fall within the scope of the present invention.

## Claims

1. A two-component waterborne coating composition, comprising a first component and a second component, wherein
the first component comprises an epoxy resin, and
the second component comprises an amine hardener, wherein the amine hardener comprises (a) moieties containing primary amine and/or secondary amine, (b) moieties containing epoxy groups and (c) moieties containing tertiary amine.

2. The coating composition according to claim 1, wherein the (c) moieties containing tertiary amine constitute 3-10 wt% of the total solid weight of the amine hardener.

3. The coating composition according to claim 2 or 3, wherein the amine hardener has an active hydrogen equivalent of 300-400 g/eq.

4. The coating composition according to any one of claims 1-3, wherein the amine hardener has a weight average molecular weight of 50,000-100,000.

5. The coating composition according to any one of claims 1-4, wherein the amine hardener further comprises additional hydrophilic moieties and/or additional hydrophobic moieties to adjust hydrophilicity of the amine hardener, such that the amine hardener has an HLB value of 5-15.

6. The coating composition according to any one of claims 1-5, wherein the amine hardener is in the form of self-emulsified emulsion.

7. The coating composition according to any one of claims 1-6, wherein the amine hardener has a branched structure, comprising a main chain and at least one branch chain.

8. The coating composition according to claim 7, wherein the (a) moieties containing primary amine and/or secondary amine and the (b) moieties containing epoxy groups in the amine hardener are located on a main chain to form a block structure.

9. The coating composition according to claim 7 or 8, wherein the (c) moieties containing tertiary amine in the amine hardener are located on a branch chain.

10. The coating composition according to any one of claims 1-6, wherein the amine hardener has a linear structure.

11. The coating composition according to any one of claims 1-10, wherein the epoxy resin has an epoxy equivalent of 450-550 g/eq.

12. The coating composition according to any one of claims 1-11, wherein the epoxy resin has a hydroxyl value of 50-200 mgKOH/g.

13. The coating composition according to any one of claims 1-12, wherein a solid weight ratio of the epoxy resin to the amine hardener is in a range of 3.5:1 to 6:1.

14. The coating composition according to any one of claims 1-13, wherein the coating composition is substantially free of a separate curing promoter.

15. The coating composition according to any one of claims 1-14, wherein the coating composition is substantially free of a separate tertiary amine compound.

16. The coating composition according to any one of claims 1-15, wherein the first component comprises pigments and/or fillers, and the pigments and/or fillers comprise antirust pigments as well as talc and/or barium sulfate.

17. The coating composition according to any one of claims 1-16, wherein the second component is substantially free of pigments and/or fillers.

18. The coating composition according to any one of claims 1-17, wherein the first component comprises a non-ionic dispersant.

19. The coating composition according to any one of claims 1-18, wherein the coating formed from the coating composition is touch dry at room temperature in 5-20 min.

20. A coated substrate, comprising a substrate and the coating composition according to any one of claims 1-19 applied on at least a part of the substrate.

21. The coated substrate according to claim 20, wherein the substrate comprises metal.

22. The coated substrate according to claim 20 or 21, wherein the substrate is a part of the following: industrial equipment, vehicles, or construction steel structures.
